Europäisches Patentamt

European Patent Office

Office européen des brevets

(19)

(11) Numéro de publication : **0 118 328**
**B1**

(12) FASCICULE DE BREVET EUROPÉEN

(45) Date de publication du fascicule du brevet :
06.05.87

(51) Int. Cl.⁴ : **B 23 K   9/00**, G 21 C 19/34

(21) Numéro de dépôt : 84400129.7

(22) Date de dépôt : 20.01.84

(54) Procédé et dispositif pour le découpage d'un fil.

(30) Priorité : 25.01.83 FR 8301094

(43) Date de publication de la demande :
12.09.84 Bulletin 84/37

(45) Mention de la délivrance du brevet :
06.05.87 Bulletin 87/19

(84) Etats contractants désignés :
BE DE FR GB IT

(56) Documents cités :
FR-A- 1 263 919
FR-A- 2 504 432
GB-A- 1 558 595

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Billon-Pierron, Claude
"Les Roux"
F-38960 Saint Etienne de Crossey (FR)**
Inventeur : **Chavand, Jean
31, rue Colonel Bougault
F-38100 Grenoble (FR)**
Inventeur : **Peccoud, Michel
Rue des Martyrs
F-38640 Claix (FR)**

(74) Mandataire : **Mongrédien, André et al
c/o BREVATOME 25, rue de Ponthieu
F-75008 Paris (FR)**

## Description

La présente invention a pour objet un procédé et un dispositif pour le découpage du fil espaceur des aiguilles de combustible nucléaire et applicable plus généralement au découpage de toute pièce métallique mince et allongée disposée sur un support de dimensions plus importantes.

Les procédés utilisés à l'heure actuelle pour désolidariser le fil espaceur des aiguilles de combustible nucléaire lorsque celles-ci ont cessé de fonctionner sont surtout des procédés mécaniques consistant d'abord à désolidariser le point de fixation du fil sur l'aiguille à l'aide d'un outil tournant ou par fusion du fil et du point de soudure à l'aide d'un arc électrique ou d'une source haute fréquence, avant de morceler le fil, toujours à l'aide de procédés mécaniques. Ces méthodes, qui ne sont pas répétitives, demandent une reconnaissance de positionnement du fil, c'est-à-dire de son orientation par rapport à l'aiguille, et, après avoir désolidarisé le fil, il n'est pas toujours facile de le morceler. De plus, on est obligé de travailler au contact de l'élément à détruire.

La présente invention a justement pour but d'éliminer ces inconvénients en proposant un procédé et un dispositif qui assurent le découpage du fil espaceur sans nécessiter une reconnaissance de positionnement du fil et qui permet la destruction et le découpage de celui-ci avec une cadence très rapide.

Selon la principale caractéristique du procédé objet de l'invention, le fil étant enroulé autour d'une pièce support de forme allongée sur au moins une partie de la longueur de cette dernière, on fait jaillir une série d'arcs électriques successifs entre au moins une électrode, placée dans un plan transversal de la pièce support, et le fil, de sorte que ce dernier soit frappé par au moins l'un des arcs.

Selon une autre caractéristique de ce procédé, après avoir fait jaillir une série d'arcs électriques dans un plan transversal de la pièce support, on fait avancer cette dernière d'une longueur déterminée afin de recommencer l'opération dans un autre plan transversal.

Eventuellement, on peut prévoir une étape supplémentaire consistant à faire jaillir un arc électrique apte à détruire un point de soudure du fil sur la pièce. D'autre part, afin de protéger les extrémités des électrodes contre l'oxydation, il est utile de prévoir un balayage de la zone où jaillissent les arcs à l'aide d'un gaz neutre, par exemple de l'argon.

L'invention a également pour objet un dispositif pour la mise en œuvre de ce procédé. Selon la principale caractéristique de ce dispositif, celui-ci comprend :

un support percé d'une ouverture permettant le passage de la pièce autour de laquelle est enroulé le fil,

au moins une électrode montée sur ledit support,

un dispositif permettant de faire jaillir un arc électrique entre l'électrode et le fil enroulé autour de la pièce,

une pièce creuse, mobile, présentant une ouverture permettant le passage de la pièce supportant le fil, l'extrémité de la pièce creuse la plus proche du support ayant une forme telle qu'elle provoque le décollement du fil de la pièce autour de laquelle il est enroulé au fur et à mesure de l'avancement de celle-ci, et

une pièce tubulaire placée en amont du support par rapport au sens de déplacement de la pièce sur laquelle est enroulé le fil, ladite pièce tubulaire présentant une ouverture permettant le passage de la pièce supportant le fil, mais dont les dimensions sont au plus égales à celles de l'ouverture ménagée dans le support.

L'invention apparaîtra mieux à la lecture de la description qui va suivre, donnée à titre purement illustratif et nullement limitatif, en référence aux dessins annexés dans lesquels :

la figure 1 est une vue schématique en perspective de l'ensemble du dispositif objet de l'invention,

la figure 2 est une vue schématique en coupe montrant la disposition des électrodes dans le dispositif de la figure 1,

la figure 3 est une vue semblable à la figure 2 illustrant une autre disposition des électrodes,

la figure 4 est une vue schématique de l'appareil équipé d'un dispositif permettant de séparer le fil de l'aiguille en aval du dispositif, lors de la mise en marche de l'appareil, et

la figure 5 est une vue semblable à la figure 4 montrant le dispositif équipé en fonctionnement, la pièce mobile creuse ayant été placée face aux électrodes.

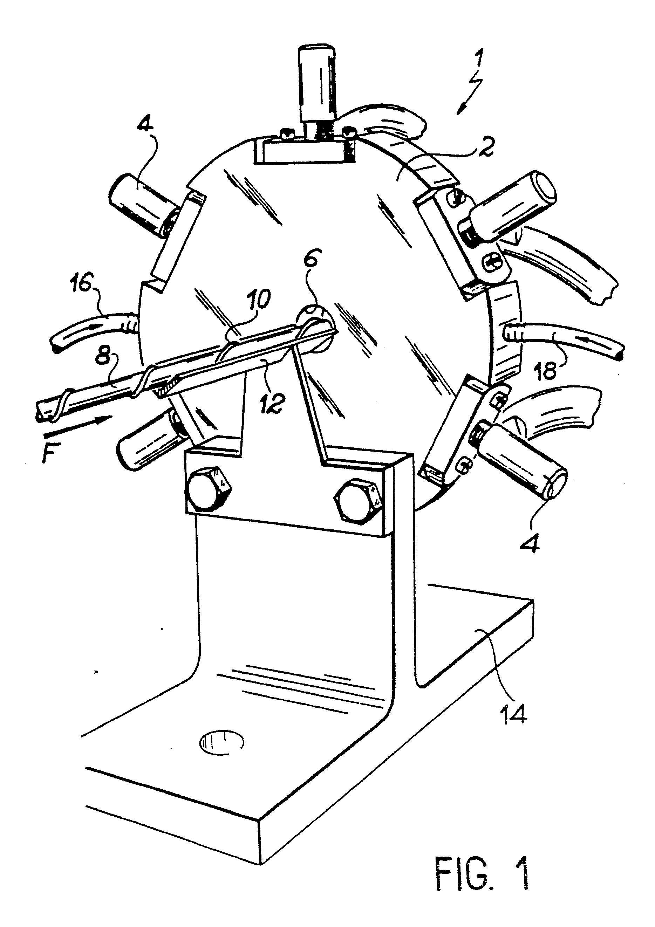

Sur la figure 1, on voit que le dispositif objet de l'invention, portant la référence générale 1, se compose essentiellement d'un support circulaire 2 sur lequel sont fixées six électrodes telles que 4, régulièrement réparties sur le pourtour du support 2. Celui-ci est percé en son centre d'une ouverture 6 permettant le passage de l'aiguille 8 autour de laquelle est enroulé le fil espaceur 10, l'aiguille avançant dans le sens de la flèche F. L'aiguille 8 est supportée et guidée par une goulotte 12, cette dernière étant fixée sur une embase 14 qui soutient également le support 2. On voit encore sur la figure deux tuyaux 16 et 18 permettant l'arrivée d'un gaz neutre, par exemple de l'argon, dans l'ouverture 6 à l'endroit où jaillissent les arcs électriques.

Le fonctionnement de l'appareil est le suivant : l'aiguille 8 étant immobilisée dans une position donnée, on fait jaillir un arc électrique entre chacune des électrodes 4 successivement et le fil 10 de l'aiguille 8. Le nombre et la disposition des électrodes sont tels que les points d'impact des arcs sur le fil 10 de l'aiguille se chevauchent partiellement afin que la surface extérieure d'une section donnée de l'aiguille 8, c'est-à-dire celle se trouvant sensiblement dans le plan défini par le support 2 et les électrodes 4, soit frappée par au moins l'un des arcs : ainsi on est sûr que l'un au moins de ces derniers frappe le fil 10 et le coupe. Une fois que l'on a fait jaillir les arcs sur un tour complet, on fait avancer l'aiguille 8 dans le sens de la flèche F d'une longueur correspondant à la longueur voulue pour les morceaux du fil espaceur et on fait jaillir une nouvelle série d'arcs sur une autre section de l'aiguille 8, un tube à embout conique étant interposé comme on le verra ci-après.

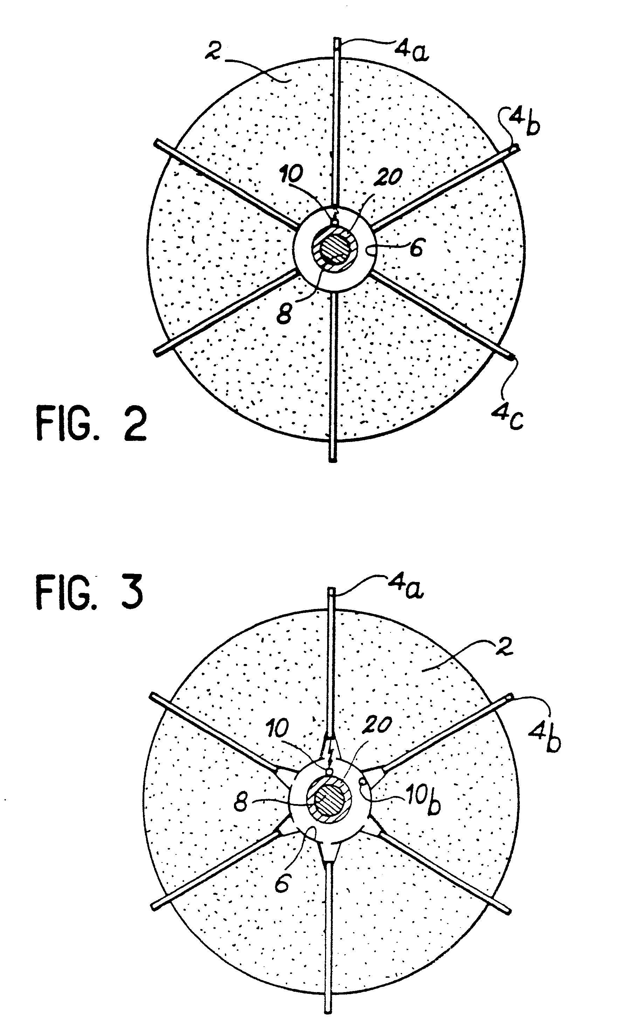

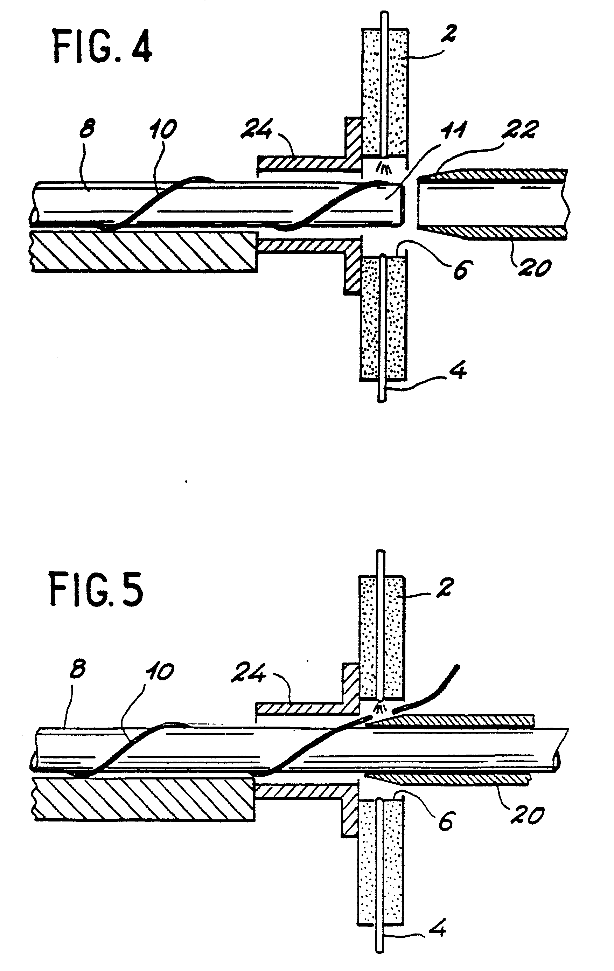

La figure 2 est une vue schématique en coupe dans le plan défini par les électrodes 4. On voit sur cette figure qu'on fait jaillir d'abord un arc entre l'une des électrodes, par exemple l'électrode 4a, et le fil 10 supporté par la pièce creuse 20. Celle-ci sera décrite ultérieurement en référence aux figures 4 et 5. Si le fil 10 n'était pas dans la position représentée sur la figure 2, il serait frappé par l'un des arcs jaillissant entre les autres électrodes, par exemple 4b, 4c, etc... puisque non seulement les points d'impact se recouvrent mais qu'on peut également prévoir un temps de chevauchement entre deux arcs consécutifs. Les électrodes sont reliées à un générateur haute fréquence (non représenté) tandis que la pièce 8 est en contact électrique avec la goulotte 12 qui sert de prise de masse afin que l'arc puisse jaillir entre chaque électrode 4 et le fil 10. Un tel dispositif permet non seulement de découper le fil en morceaux de longueur déterminée, mais encore de le désolidariser de l'aiguille 8 par destruction et le lissage des points de soudure à l'aide des arcs comme représenté sur la figure 4 décrite ci-après.

A titre d'essai, on a réalisé une installation expérimentale comprenant deux postes de soudure, une armoire d'automatisme et deux générateurs d'amorçage à haute fréquence dont chacun alimente 3 des 6 électrodes de l'installation. Un commutateur tournant distribue la puissance successivement sur les différentes électrodes ou torches avec un temps de chevauchement, de sorte que l'arc est transféré d'une électrode à l'autre et balaie ainsi toute la circonférence de l'aiguille. On a pu constater que la puissance nécessaire était très faible puisqu'on ne dépassait pas 50 A à basse tension, ce qui pose peu de problèmes de refroidissement de la torche. Pour fondre le point de soudure du fil sur l'aiguille, l'intensité utilisée était d'environ 45 A, la même intensité étant nécessaire pour lisser les points de soudure afin qu'ils ne forment pas des aspérités risquant d'accrocher dans les appareils de retraitement. Enfin, pour le découpage du fil en morceaux de longueur déterminée, une intensité de 20 A s'est avérée suffisante lorsque le fil a un diamètre de 12/10° de mm.

La figure 2 illustre une variante dans laquelle les extrémités des électrodes se trouvent exactement sur la paroi de l'orifice 6 tandis que, dans le cas de la figure 3, les extrémités des électrodes se trouvent sur un cercle de diamètre plus grand que celui du passage 6, par exemple sur un cercle de diamètre 20 mm alors que le passage 6 a un diamètre de 15 mm.

La mise en marche de l'appareil est représentée sur la figure 4. Le fil 10, fixé à une des extrémités 11, constituant le bouchon, de l'aiguille 8, est découpé et désolidarisé de l'aiguille. On remarque que la pièce creuse 20 est sortie du support 2. Dès que le fil 10 est désolidarisé du bouchon de l'aiguille, la pièce creuse 20 est mise en position de fonctionnement, c'est-à-dire introduite à l'intérieur de l'ouverture 6 de la pièce support 2 comme représenté sur la figure 5.

Pour ce faire, l'extrémité 22 de la pièce 20 a une forme en biseau avec chanfrein très allongé afin que la partie aval du fil 10 soit soulevée et écartée de l'aiguille 8 au fur et à mesure que celle-ci avance.

La pièce creuse 20 est ainsi interposée entre l'arc et l'aiguille, ce qui évite toute action de l'arc sur l'aiguille.

Pour éviter que la partie amont du fil 10 ne s'écarte trop de l'aiguille, on place une pièce tubulaire 24, dont le diamètre intérieur est au plus égal à celui de l'ouverture 6, entre le support 2 et la goulotte 12.

Ainsi, le procédé et le dispositif de l'invention présentent de nombreux avantages puisqu'ils permettent le découpage du fil espaceur des aiguilles de combustible avec une cadence très rapide et avec la certitude de couper le fil dans une section donnée quelle que soit la position et l'orientation de l'aiguille par rapport au support 2. De plus, il n'y a pas de contact avec les pièces et on n'est pas gêné par une éventuelle déformation de l'aiguille. Enfin, on peut supprimer les surépaisseurs du point de soudure puisque, avec un arc électrique, il est possible d'étaler celui-ci sur une surface suffisamment grande pour qu'il n'y ait plus d'aspérité.

Il est bien entendu que l'invention ne se limite pas au seul mode de réalisation qui vient d'être décrit mais qu'on peut apporter des variantes sans sortir pour autant du cadre de l'invention. Par exemple, si on a décrit un dispositif comportant six électrodes, le nombre ou la forme de celles-ci peut varier et sera choisi par l'homme de l'art en fonction des dimensions des pièces à traiter. Il en est de même en ce qui concerne le choix de l'intensité à utiliser pour découper le fil ou détruire les points de soudure. Enfin, si on a décrit l'invention dans le cas particulier du découpage du fil espaceur des aiguilles de combustible nucléaire, l'invention peut également s'appliquer à d'autres domaines et en particulier chaque fois qu'il s'agit de découper une pièce mince et allongée, par exemple un tube de faible diamètre, enroulée sur un support de dimensions plus importantes : celui-ci peut être un tube ou un support cylindrique ou éventuellement une pièce allongée de section quelconque pourvu qu'on puisse faire jaillir des arcs électriques sur toute la périphérie de cette dernière afin de découper la pièce qui est enroulée sur le support.

## Revendications

1. Procédé de découpage d'un fil (10) ou d'une pièce métallique mince et allongée enroulé autour d'une pièce support ayant elle-même une forme allongée (8) sur au moins une partie de la longueur de cette dernière, caractérisé en ce qu'on fait jaillir une série d'arcs électriques successifs entre au moins une électrode (4), placée dans un plan transversal de la pièce support (8), et le fil (10), de sorte que ce dernier soit frappé par au moins l'un des arcs.

2. Procédé selon la revendication 1, caractérisé en ce qu'après avoir fait jaillir une série d'arcs électriques dans un plan transversal de la pièce (8), on fait avancer cette dernière d'une longueur déterminée afin de recommencer l'opération dans un autre plan transversal.

3. Procédé selon l'une quelconque des revendications 1 et 2, caractérisé en ce qu'il comprend une étape supplémentaire consistant à faire jaillir un arc électrique apte à détruire un point de soudure du fil (10) sur la pièce (8).

4. Procédé selon l'une quelconque des revendications 1 à 3, caractérisé en ce qu'on réalise un balayage de la zone où jaillissent les arcs à l'aide d'un gaz neutre.

5. Dispositif pour le découpage d'un fil, caractérisé en ce qu'il comprend :

un support (2) percé d'une ouverture (6) permettant le passage de la pièce (8) autour de laquelle est enroulé le fil (10),

au moins une électrode (4) montée sur ledit support (2),

un dispositif permettant de faire jaillir un arc électrique entre l'électrode (4) et le fil (10) enroulé autour de la pièce (8),

une pièce creuse (20), mobile, présentant une ouverture permettant le passage de la pièce (8) supportant le fil (10), l'extrémité (22) de la pièce creuse (20) la plus proche du support (2) ayant une forme telle qu'elle provoque le décollement du fil (10) de la pièce (8) autour de laquelle il est enroulé au fur et à mesure de l'avancement de celle-ci, et

une pièce tubulaire (24) placée en amont du support (2) par rapport au sens de déplacement de la pièce (8) sur laquelle est enroulé le fil (10), ladite pièce tubulaire (24) présentant une ouverture qui permet le passage de la pièce (8) supportant le fil (10), mais dont les dimensions sont au ·.plus égales à celles de l'ouverture (6) ménagée dans le support (2).

## Claims

1. Method of cutting off a wire (10) or a thin, elongate metal piece wound round a support part, itself having an elongate shape (8) over at least some of the length of the latter, characterized in that a series of successive electric arcs is made to flash over between at least one electrode (4) located in a transverse plane of the support part (8) and the wire (10), so that the latter is struck by at least one of the arcs.

2. Method according to Claim 1, characterized in that, after a series of electric arcs has been made to flash over in a transverse plane of the part (8), the latter is advanced a specific length, in order to recommence the operation in another transverse plane.

3. Method according to either one of Claims 1 and 2, characterized in that it includes an additional step involving making an electric arc flash over so as to destroy a welding spot joining the wire (10) to the part (8).

4. Method according to any one of Claims 1 to 3, characterized in that the zone where the arcs flash over is swept with an inert gas.

5. Device for cutting off a wire, characterized in that it comprises :

a carrier (2) perforated with an orifice (6) allowing the passage of the part (8) round which the wire (10) is wound,

at least one electrode (4) mounted on the said carrier (2),

a device allowing an electric arc to flash over between the electrode (4) and the wire (10) wound round the part (8),

a movable hollow piece (20) having an orifice allowing the passage of the part (8) supporting the wire (10), the end (22) of the hollow piece (20) nearest the carrier (2) having such a shape that it causes the wire (10) to be detached from the part (8), round which it is wound, in proportion to the advance of the latter, and

a tubular piece (24) located upstream of the carrier (2) in relation to the direction of movement of the part (8) on which the wire (10) is wound, the said tubular piece (24) having an orifice which allows the passage of part (8) supporting the wire (10), but the dimensions of which are at most equal to those of the orifice (6) made in the carrier (2).

## Patentansprüche

1. Verfahren zum Zerkleinern eines Drahtes (10) oder eines langgestreckten dünnen metallischen Teils, der auf einer Halterung von langgestreckter Form wenigstens über ein Teil deren Länge aufgewickelt ist, dadurch gekennzeichnet, daß man eine Anzahl von aufeinanderfolgenden elektrischen Lichtbögen zwischen wenigstens einer in einer Querebene zur Halterung (8) angeordneten Elektrode (4) und den Draht (10) derart überspringen läßt, daß letzterer von wenigstens einem Lichtbogen beaufschlagt wird.

2. Verfahren nach Anspruch 1, dadurch gekennzeichnet, daß nach dem Überspringen einer Anzahl elektrischer Lichtbögen in einer Querebene zur Halterung (8) diese um eine vorgegebene Strecke vorgeschoben wird, um so den Vorgang in einer anderen Querebene erneut durchzuführen.

3. Verfahren nach einem der Ansprüche 1 und 2, dadurch gekennzeichnet, daß ein zusätzlicher Schritt vorgesehen ist, der darin besteht, einen elektrischen Lichtbogen überspringen zu lassen, der geeignet ist, eine Schweißstelle des Drahtes (10) auf der Halterung (8) zu zerstören.

4. Verfahren nach einem der Ansprüche 1 bis 3, dadurch gekennzeichnet, daß eine Spülung des Bereiches, in dem die Lichtbögen überspringen, mittels eines Inertgases durchgeführt wird.

5. Vorrichtung zum Zerkleinern eines Drahtes, dadurch gekennzeichnet, daß sie Folgendes aufweist :

ein Stützteil (2) mit einer Öffnung (6) für den Durch laß der Halterung (8), um die der Draht (10) aufgewickelt ist,

wenigstens eine Elektrode (4), die auf dem Stützteil (2) angeordnet ist,

eine Vorrichtung um einen elektrischen Lichtbogen zwischen der Elektrode (4) und dem auf der Halterung (8) aufgewickelten Draht (10) überspringen zu lassen,

ein bewegliches Hohlteil (20), das eine Öffnung aufweist für den Durchlaß der Halterung (8), die den Draht (10) trägt, wobei das dem Stützteil (2) benachbarte Ende (22) des Hohlteils (20) eine derartige Form aufweist, daß sie das Ablösen des Drahtes (10) von der Halterung (8), um die er aufgewickelt ist, im Maße ihres Vorschubs von ihr bewirkt und

eine rohrförmiges Teil (24), das in Vorschubrichtung der Halterung (8), auf der der Draht (10) aufgewickelt ist, gesehen, vor dem Stützteil (2) angeordnet ist, wobei dieses rohrförmige Teil (24) eine Öffnung aufweist, die den Durchlaß der den Draht (10) tragenden Halterung (8) ermöglicht, wobei ihre Abmessungen höchstens gleich denjenigen der in dem Stützteil (2) vorgesehenen Öffnung (6) sind.

FIG. 1

FIG. 2

FIG. 3

# FIG. 4

# FIG. 5